# EUROPEAN PATENT SPECIFICATION

(11) **EP 1 150 440 B1**
(45) Date of publication and mention of the grant of the patent: **12.07.2006**
(21) Application number: 00201527.9
(22) Date of filing: 28.04.2000
(51) Int. Cl.: H04B 7/08

(54) **Antenna diversity receiver**
Empfänger mit Antennendiversity
Récepteur avec diversité d'antenne

(43) Date of publication of application: 31.10.2001
(73) Proprietor: SIEMENS AKTIENGESELLSCHAFT, 80333 München (DE)
(72) Inventor: Meijer, Pieter, 5616 CK Eindhoven (NL); Toffolo, franco, 5631 JP Eindhoven (NL); Bänziger, Christiaan Marie Hubertus, 6041 PD Roermond (NL)

(56) References cited:
- EP-A- 0 274 157
- US-A- 5 379 449
- US-A- 5 742 896

## Description

The invention relates to an antenna diversity receiver comprising antenna selective switching means for coupling one of a plurality of antennas to an RF receiver input, as well as a mulitpath detector for controlling said antenna selective switching means. Such a receiver may use Philips' IC TEA 6101 and is described in Philips' application datasheets of this IC. Furthermore, US-A 5742896 discloses a diversity reception apparatus which includes a number of receivers each having a distortion detector. Switching is made in accordance with the signal strength and the multipath interference level on the antenna.

The reception of a wanted RF broadcast transmitter signal may be disturbed or otherwise deteriorated by various phenomena, such as multipath reception and/or adjacent channel interferences. In general, multipath reception is caused by signal reflections at and/or against environmental physical obstacles, such as mountains, trees, buildings, fences and the like. Due to such signal reflections an RF broadcast signal may arrive at a certain reception location through various different signal paths, i. e. in various different amplitude and phase conditions. The summation of these mulitpath signals at the antenna of the receiver results in unpredictable signal amplitude and/or phase distorsions, most often effectuating in part or complete cancellation of the useful RF reception signal. These signal cancellations, hereinafter also being referred to as signal dips, strongly depend on the RF carrier frequency of the received RF broadcasting signal and on the location of reception.

Said signal dips severely deteriorate the wanted RF broadcasting signal and therewith also the overall signal reception quality. However, a relatively small shift in the position of the antenna could already suffice to strongly improve said signal reception quality. This solution is used in socalled antenna diversity receivers to avoid reception of multipath distorted RF signals in particular mobile FM receivers. Such antenna diversity receivers are provided with two or more mutually apart placed antennas being coupled to an RF input of a receiver. Only thàt antenna is actually connected to the RF receiver input, having best local receiving conditions with respect to the other antenna(s). This antenna, hereinafter also being referred to as actual antenna, will be effective in the reception and supply of the wanted RF broadcasting signal to the receiver as long as the multipath distortion at this actual antenna remains smaller than a certain predetermined multipath threshold level. As soon as the received multipath distortion exceeds said certain predetermined multipath threshold level, a change over in the RF signal supply to the receiver from this actual antenna to another antenna being then positioned at a location with better receiving conditions, is initiated. The receiver is therewith continuously optimised for minimum multipath reception.

However, inherent to the antenna diversity feature are the short interruptions in the RF signal supply to the receiver during such antenna change over or switching action. Due to the delay between the occurrence of an actual multipath caused signal dip and the detection thereof, said RF signal interruptions may be detected as being caused by multipath effects, and may therewith initiate a subsequent false antenna switching action. Such false antenna switching action may in its turn be detected as a multipath originated signal dip again, initiating a further false antenna switching action, and so on and so forth, with a kind of oscillating effect as a result. To reduce the risk of oscillating antenna switching actions, the above known antenna diversity receivers using Philips' IC TEA 6101 are provided with means to disable any switching action following a preceding switching action within a certain predetermined fixed time period.

This known measure however, is not effective in receivers with dynamic IF selectivity, such as receivers with adjacent channel suppression. As mentioned above, adjacent channel interferences are another important source of signal distorsion and are usually caused by FM radio broadcast signals modulated on a carrier positioned in frequency adjacent to the carrier frequency of a wanted FM radio broadcast signal. Due to e.g. peak values in the FM modulation signal, these adjacent channel FM radio signals may temporarily exceed the allocated channel bandwidth therewith breaking through into the frequency range of said wanted FM radio broadcast signal. In receiver with adjacent channel suppression such adjacent channel interferences are being suppressed by varying the bandwidth of the variable bandwidth intermediate frequency (IF) selective means - hereinafter also being referred to as IF bandwidth - dependent on the deviation of the adjacent channel signal within the frequency range of the wanted FM radio broadcast signal. The larger said deviation, the smaller the bandwidth of the variable bandwidth intermediate frequency (IF) selective means. The so dynamically varying IF selectivity therewith effectuates a suppression of the adjacent channel interferences.

It is an object of the invention to combine in a receiver the benefits of the antenna diversity feature with those of the dynamic IF selectivity feature while preventing unwanted effects to occur.

It is another object of the invention to improve the overall performance of antenna diversity receivers.

An antenna diversity receiver comprising antenna selective switching means for coupling one of a plurality of antennas to an RF receiver input, as well as a multipath detector for controlling said antenna selective switching means is therefore characterised by switching disabling means for automatically disabling said switching means when the signal delay between the occurrence of multipath in the RF reception signal and said switching exceeds a predetermined critical signal delay value.

The invention is based on the recognition that in an antenna diversity receiver the delay between the actual occurrence of a multipath caused signal dip and the detection thereof is determined by the receiver's IF selectivity. In a receiver with dynamic IF selectivity, the IF bandwidth is variable, therewith causing said delay to vary too: the smaller the IF bandwidth the longer the delay and vice versa. However, the longer the delay, the greater the risk of oscillating false antenna switching actions. By introducing said delay as new parameter for disabling antenna switching actions in accordance with the invention, any antenna switching action is being disabled when and for the time said delay exceeds said predetermined critical value. This allows for a combination of the features of antenna diversity and dynamic IF selectivity, while preventing antenna switching actions from oscillating.

Preferably, such antenna diversity receiver is characterised by an adjacent channel detector coupled to a bandwidth variable intermediate frequency (IF) circuit, said predetermined critical signal delay value defining a critical bandwidth for said bandwidth variable IF circuit, said switching means being automatically disabled when the bandwidth of said bandwidth variable IF circuit is smaller than said critical bandwidth.

This measure is based on the above correspondence between the IF bandwidth on the one hand and said delay between the actual occurrence of a multipath caused signal dip and the detection thereof on the other hand, the bandwidth of the bandwidth variable intermediate frequency (IF) circuit - also being referred to as IF selective means - being accurately reflected in the output signal of the adjacent channel detector. This allows for a simple implementation of the invention.

A further preferred embodiment of the antenna diversity receiver according to the invention is characterised by a threshold circuit being coupled between an output of the adjacent channel detector and a control input of the switching disabling means for comparing the output signal of the adjacent channel detector with a threshold value corresponding to said critical bandwidth and for supplying a switching disabling control signal to the switching disabling means when said output signal of the adjacent channel detector effectuates a bandwidth smaller than said critical bandwidth.

With a simple adjustment of the threshold voltage, the critical bandwidth can be set at a value preventing the antenna switching actions from oscillating on the one hand and providing an effective adjacent channel suppression on the other hand.

An antenna diversity receiver, which is provided with a fixed timer circuit introducing a fixed switching disabling period following each antenna switching action in accordance with the invention is preferably characterised by said bandwidth variable intermediate frequency (IF) circuit effecting a signal delay at said critical bandwidth corresponding to said fixed switching disabling period.

Such a fixed timer circuit is included in the above Philips' IC TEA 6101 and may well be combined with the antenna switching disabling functionality initiated by the above switching disabling control signal. The use of the fixed switching disabling period as a reference for the determination of the critical bandwidth avoids the occurrence of antenna switching oscillations throughout the complete bandwidth control range of the bandwidth variable intermediate frequency (IF) circuit.

In practise the fixed switching disabling period following each antenna switching action in said Philips' IC TEA 6101 is 20 usec., defining said critical bandwidth to be substantially within the range between 40 and 50 KHz.

Another preferred embodiment of antenna diversity receiver according to the invention, providing for a simple combination of both the adjacent channel suppression feature with the antenna diversity feature is characterised in that the adjacent channel detector is provided with a multiplex input being coupled to an output of the demodulator for detecting adjacent channel reception at the occurrence of both an amplitude variation in the IF signal level as well as distortion components in the demodulator output signal.

In yet another preferred embodiment, the plurality of antennas comprises an antenna for receiving radio broadcast RF signals as well as an antenna for receiving telecommunication RF signals.

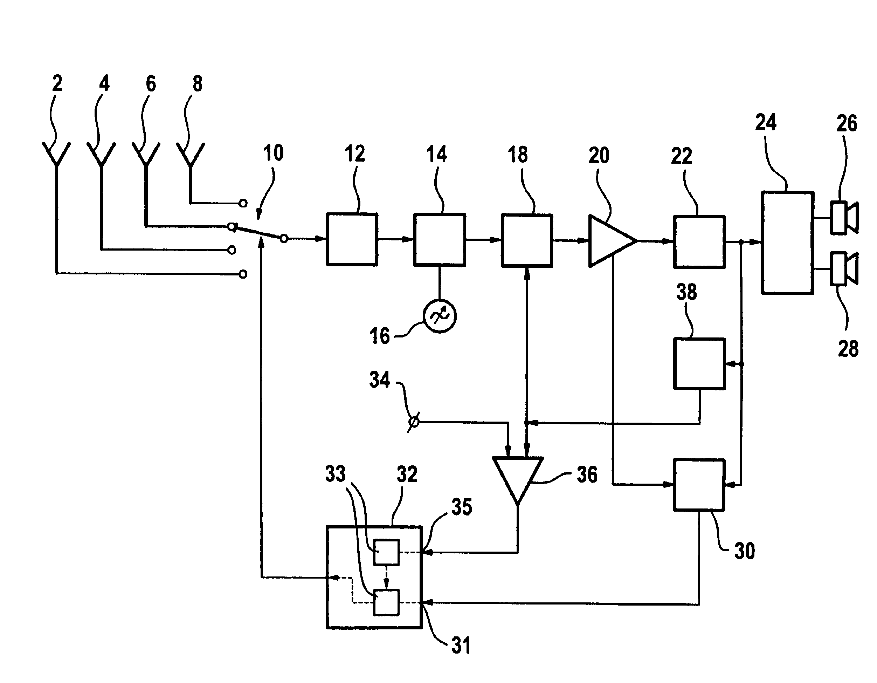

These and further aspects and advantages of the invention will be discussed more in detail hereinafter with reference to the disclosure of preferred embodiments, and in particular with reference to the appended single Figure showing a preferred embodiment of a receiver according to the invention.

The single Figure shows an antenna diversity FM receiver comprising first to fourth antennas 2, 4, 6, 8 coupled through antenna selective switching means 10 to an RF receiver input circuit 12, subsequently followed by a mixer device 14 being supplied with a tunable local oscillator signal from an oscillator circuit 16, variable bandwidth intermediate frequency (IF) selective means 18 - hereinafter also being referred to as selective IF circuit -, an IF amplifier 20, an FM demodulator 22 and baseband modulation signal processing means 24 being coupled to stereo left and stereo right signal reproducing means 26, respectively 28.

The signal processing in the antenna diversity receiver described sofar is on itself known: an RF broadcasting signal received at one of the first to fourth antennas 2, 4, 6, 8 - in the embodiment shown: the third antenna 6 (hereinafter also referred to as actual antenna) - is supplied via the antenna selective switching means 10 and an RF receiver input terminal to the RF receiver input circuit 12 for a broadband selection and amplification thereof. The output signal of the RF receiver input circuit 12 is thereafter mixed in the mixer device 14 with the tunable local oscillator signal for a first demodulation of a wanted RF broadcast signal into an intermediate frequency (IF) signal. This IF signal is filtered in the selective IF circuit 18, subsequently amplified in the IF amplifier 20 and demodulated in the FM demodulator 22 into a baseband modulation signal comprising a stereo multiplex (MPX) signal. The MPX signal is further processed in the processing means 24 to obtain stereo left and stereo right signals to be converted into acoustic signals in said stereo left and stereo right signal reproducing means 26, respectively 27.

The antenna diversity receiver also comprises a multipath detector 30 for a detection of multipath distorsion in the received RF signal. The detection of multipath distorsion is based on two criteria: the occurrence of a (fast) amplitude dip in the level of the IF signal ànd the occurrence of distortion components occurring within the frequency range of the baseband modulation signal above the frequency spectrum of the MPX signal. First and second input terminals of the multipath detector 30 are therefore coupled respectively to an output of the selective IF circuit 18 and to an output of the FM demodulator 22. If an IF signal dip is detected to occur simultaneously with distortion components within the frequency range of the baseband modulation signal, then the multipath detector 30 supplies a switching control signal to a switching control signal input terminal 31 of an antenna switching control device 32. This causes the antenna selective switching means 10 to change over reception from antenna 6 being the actual antenna up to this switching action, to another antenna, having better receiving conditions than the antenna 6, e.g. antenna 8 (the connection to the RF receiver input circuit 12 not being shown). The next detection of a multipath caused signal dip will initiate in same manner again a subsequent antenna switching action. In receivers using Philips' IC TEA 6101 the antenna switching control device 32 comprises switching disabling means 33 preventing any antenna switching action from being followed by a subsequent antenna switching action within a fixed time period of 20 usec., hereinafter referred to as fixed switching immunity periods. The antenna switching disabling means 33 comprises a timer circuit (not shown) using a counter, which is set to start counting monotonously up or down at the occurrence of each switching control signal and stops counting after said fixed time period of 20 usec, providing immunity from switching control signals during counting. This prevents switching actions during these fixed switching immunity periods from occurring.

The antenna diversity receiver is provided with an adjacent channel detector 38 functioning as bandwidth control means having an input being coupled to an output of the FM demodulator 22 and an output being coupled to a bandwidth control input of the selective IF circuit 18 for varying the bandwidth thereof dependent on adjacent channel interferences, such that the bandwidth of the selective IF circuit 18 is smaller, the more the adjacent channel signal is overlapping or threspassing the frequency area of the wanted RF signal. The interferences caused by such adjacent channel signal are therewith reduced. For a more detailed description of the functioning of the adjacent channel feature in suppressing adjacent channel interferences, reference is made to US patent 4 907 293.

In addition to the fixed switching immunity periods the receiver according to the invention is also provided with an immunity for switching control signals from the multipath detector 30 when and for the time, the bandwidth of the selective IF circuit 18 is smaller than a certain critical bandwidth value. To avoid switching actions from oscillating at any bandwidth of the selective IF circuit 18 within its entire bandwidth variation range, the length of the fixed switching immunity periods following each antenna switching action provided by the timer circuit is used to determine the critical bandwidth value, such that said bandwidth variable intermediate frequency (IF) circuit will effect a signal delay at said critical bandwidth corresponding to said fixed switching disabling period. At a length of the fixed switching immunity periods of 20 usec. said critical bandwidth value, also being referred to as predetermined threshold value of the IF selectivity bandwidth, will be substantially within the range between 40 and 50 KHz.

Therefore, the receiver shown comprises a threshold circuit 36 being coupled between an output of the adjacent channel detector 38 and a control input 35 of the antenna switching disabling means 33 for comparing the output signal of the adjacent channel detector 38 with a threshold value corresponding to said critical bandwidth value and for supplying a switching disabling control signal to the antenna switching disabling means 33, when said output signal of the adjacent channel detector 38 effectuates a bandwidth smaller than said critical bandwidth value. The threshold value is set with a well chosen predetermined threshold voltage Vth supplied from a threshold voltage input terminal 34 to the threshold circuit 36.

The person skilled in the art will recognize alternative embodiments within the ambit of the present invention, the scope of which has justfully been determined by the appended Claims hereinafter. For example, the plurality of antennas may comprise an antenna for receiving radio broadcast RF signals as well as an antenna for receiving telecommunication RF signals.

## Claims

1. Antenna diversity receiver comprising antenna selective switching means (10) for coupling one of a plurality of antennas (2, 4, 6, 8) to an RF receiver input (12), as well as a multipath detector (30) for controlling said antenna selective switching means **characterised by** switching disabling means (33) for automatically disabling said switching means when the signal delay between the occurrence of multipath in the RF reception signal and the corresponding switching would exceed a predetermined critical signal delay value.

2. Antenna diversity receiver according to claim 1, **characterised by** an adjacent channel detector coupled to a bandwidth variable intermediate frequency (18), IF, circuit, said predetermined critical delay value defining a critical bandwidth for said bandwidth variable IF circuit, said switching means being automatically disabled when the bandwidth of said bandwidth variable IF circuit is smaller than said critical bandwidth.

3. Antenna diversity receiver according to claim 2, **characterised by** a threshold circuit being coupled between an output of the adjacent channel detector and a control input of the switching disabling means for comparing the output signal of the adjacent channel detector with a threshold value corresponding to said critical bandwidth and for supplying a switching disabling control signal to the switching disabling means when said output signal of the adjacent channel detector effectuates a bandwidth smaller than said threshold bandwidth value.

4. Antenna diversity receiver according to claim 2 or 3, which is provided with a fixed circuit introducing a fixed switching disabling period following each antenna switching action in accordance with the invention **characterised by** said bandwidth variable intermediate frequency circuit effecting a signal delay at said critical bandwidth corresponding to said fixed switching disabling period.

5. Antenna diversity receiver according to one of claims 2 to 4, **characterised in that** said predetermined threshold value of the IF selectivity bandwidth is substantially within the range between 40 and 50 KHz.

6. Antenna diversity receiver according to one of claims 2 to 5, **characterised in that** the adjacent channel detector is provided with a multiplex input being respectively coupled to an output of the demodulator for detecting adjacent channel reception at the occurrence of both an amplitude variation in the IF signal level as well as distortion components in the demodulator output signal.

## Patentansprüche

1. Antennendiversityempfänger mit antennenselektiven Schaltmitteln (10) zum Ankoppeln einer von einer Mehrzahl von Antennen (2, 4, 6, 8) an einen HF-Empfängereingang (12) wie auch einem Mehrwegedetektor (30) zum Steuern des antennenselektiven Schaltmittels, **gekennzeichnet durch** Schaltsperrmittel (33) zum automatischen Sperren des Schaltmittels, wenn die Signalverzögerung zwischen dem Auftreten von Mehrweg im HF-Empfangssignal und dem entsprechenden Umschalten einen vorbestimmten kritischen Signalverzögerungswert überschreiten würde.

2. Antennendiversityempfänger nach Anspruch 1, **gekennzeichnet durch** einen an eine bandbreitenvariable Zwischenfrequenz-(ZF-) Schaltung (18) angekoppelten Nachbarkanaldetektor, wobei der vorbestimmte kritische Verzögerungswert eine kritische Bandbreite für die bandbreitenvariable ZF-Schaltung definiert, wobei das Schaltmittel automatisch gesperrt wird, wenn die Bandbreite der bandbreitenvariablen ZF-Schaltung kleiner als die kritische Bandbreite ist.

3. Antennendiversityempfänger nach Anspruch 2, **gekennzeichnet durch** eine Schwellwertschaltung, die zwischen einen Ausgang des Nachbarkanaldetektors und einen Steuereingang des Schaltsperrmittels gekoppelt ist, um das Ausgangssignal des Nachbarkanaldetektors mit einem Schwellwert entsprechend der kritischen Bandbreite zu vergleichen und um ein Schaltsperrsteuerungssignal dem Schaltsperrmittel zuzuführen, wenn das Ausgangssignal des Nachbarkanaldetektors eine kleinere Bandbreite als der Schwellwertbandbreitenwert bewirkt.

4. Antennendiversityempfänger nach Anspruch 2 oder 3, der mit einer festen Schaltung ausgestattet ist, die nach jeder Antennenumschaltehandlung gemäß der Erfindung eine feste Schaltsperrperiode einführt, **dadurch gekennzeichnet, daß** die bandbreitenvariable Zwischenfrequenzschaltung eine Signalverzögerung bei der kritischen Bandbreite entsprechend der festen Schaltsperrperiode bewirkt.

5. Antennendiversityempfänger nach einem der Ansprüche 2 bis 4, **dadurch gekennzeichnet, daß** der vorbestimmte Schwellwert der ZF-Selektivitätsbandbreite im wesentlichen im Bereich zwischen 40 und 50 kHz liegt.

6. Antennendiversityempfänger nach einem der Ansprüche 2 bis 5, **dadurch gekennzeichnet, daß** der Nachbarkanaldetektor mit einem Multiplexeingang ausgestattet ist, der jeweils an einen Ausgang des Demodulators angekoppelt ist, um Nachbarkanalempfang beim Auftreten sowohl einer Amplitudenvariation im ZF-Signalpegel wie auch von Verzerrungskomponenten im Demodulatorausgangssignal zu erkennen.

## Revendications

1. Récepteur à diversité d'antenne comprenant un moyen de commutation sélective d'antenne (10) pour coupler l'une d'une pluralité d'antennes (2, 4, 6, 8) à une entrée de récepteur RF (12), ainsi qu'un détecteur de trajets multiples (30) pour commander ledit moyen de commutation sélective d'antenne, **caractérisé par** un moyen de désactivation de commutation (33) pour désactiver automatiquement ledit moyen de commutation lorsque le retard du signal entre l'occurrence des trajets multiples dans le signal de réception RF et la commutation correspondante dépassera une valeur de retard de signal critique prédéterminée.

2. Récepteur à diversité d'antenne selon la revendication 1, **caractérisé par** un détecteur de voie adjacente couplé à un circuit à fréquence intermédiaire, IF, à largeur de bande variable (18), ladite valeur de retard critique prédéterminée définissant une largeur de bande critique pour ledit circuit IF à largeur de bande variable, ledit moyen de commutation étant désactivé automatiquement lorsque la largeur de bande dudit circuit IF à largeur de bande variable est plus petite que ladite largeur de bande critique.

3. Récepteur à diversité d'antenne selon la revendication 2, **caractérisé par** un circuit de seuil couplé entre une sortie du détecteur de voie adjacente et une entrée de commande du moyen de désactivation de commutation pour comparer le signal de sortie du détecteur de voie adjacente à une valeur de seuil correspondant à ladite largeur de bande critique et pour délivrer un signal de commande de désactivation de commutation audit moyen de désactivation de commutation lorsque ledit signal de sortie du détecteur de voie adjacente réalise une largeur de bande plus petite que ladite valeur de largeur de bande de seuil.

4. Récepteur à diversité d'antenne selon la revendication 2 ou 3, qui est muni d'un circuit fixe introduisant une période de désactivation de commutation fixe à la suite de chaque action de commutation d'antenne selon l'invention, **caractérisé par** ledit circuit à fréquence intermédiaire à largeur de bande variable effectuant un retard du signal au niveau de ladite largeur de bande critique correspondant à ladite période de désactivation de commutation fixe.

5. Récepteur à diversité d'antenne selon l'une des revendications 2 à 4, **caractérisé en ce que** ladite valeur de seuil prédéterminée de la largeur de bande de sélectivité IF est substantiellement dans la plage comprise entre 40 et 50 KHz.

6. Récepteur à diversité d'antenne selon l'une des revendications 2 à 5, **caractérisé en ce que** le détecteur de voie adjacente est muni d'une entrée multiplex couplée respectivement à une sortie du démodulateur pour détecter une réception de signal de voie adjacente lors de l'occurrence à la fois d'une variation d'amplitude du niveau de signal IF et de composantes de distorsion dans le signal de sortie du démodulateur.
